# DEMANDE DE BREVET EUROPEEN

(11) **EP 0 618 736 A1**
(43) Date de publication de la demande: **05.10.1994**
(21) Numéro de dépôt: 94200809.5
(22) Date de dépôt: 25.03.1994
(51) Int. Cl.: H04N 7/167

(54) **Procédé et dispositif pour l'embrouillage et le désembrouillage d'une émission déterminée de télévision**

(30) Priorité: 31.03.1993 FR 9303777
(71) Demandeur: PHILIPS ELECTRONIQUE GRAND PUBLIC, 92150 Suresnes (FR); Philips Electronics N.V., 5621 BA Eindhoven (NL)
(72) Inventeur: Le Berre, Jacques, Société Civile S.P.I.D., F-75008 Paris (FR)
(74) Mandataire: Caron, Jean

(57) **Abrégé**

Un dispositif récepteur comporte un générateur pseudo-aléatoire (18) initialisé par un mot de contrôle (CW) et un lecteur de carte à mémoire (19). Selon l'invention, il comporte des moyens (5) pour lire le mot de contrôle dans un tableau de nombres contenu dans une mémoire morte d'une carte à mémoire (17) en utilisant une manière de le faire parmi plusieurs manières différentes, ainsi que des moyens (6) pour recevoir de l'émetteur un signal indiquant quel est le choix effectué à un instant donné en ce qui concerne la dite manière.

Application à la télévision pour le désembrouillage d'une seule retransmission d'un événement déterminé.

## Description

La présente invention concerne un procédé pour l'embrouillage, au niveau d'un émetteur, et le désembrouillage, au niveau de récepteurs, d'une émission déterminée de télévision à durée limitée, l'embrouillage étant réalisé au moyen d'un générateur pseudo-aléatoire initialisé par un mot de contrôle et le désembrouillage impliquant la reconstruction à la réception, au moyen d'un dispositif à carte à mémoire , du mot de contrôle qui initialise un générateur pseudo-aléatoire identique à celui de l'émetteur, lequel générateur pseudo-aléatoire fournit les données nécessaires au désembrouillage
ainsi qu'un dispositif émetteur pour la mise en oeuvre du procédé selon l'invention, comportant un générateur pseudo-aléatoire initialisé par un mot de contrôle, et un dispositif récepteur pour la mise en oeuvre du procédé selon l'invention, comportant un générateur pseudo-aléatoire initialisé par un mot de contrôle et un lecteur de carte à mémoire.
Ce procédé et ces dispositifs sont utilisés dans des systèmes d'émission et de réception embrouillés de télévision.

Un tel procédé d'embrouillage de télévision est connu du brevet GB-P-2 132 860 (British Broadcasting Corp.).
Dans ce procédé de télévision par satellite, le mot de contrôle est créé de façon complètement aléatoire et est transmis sous forme chiffrée aux récepteurs. Ceux-ci le déchiffrent au moyen d'un calcul réalisé dans une carte "intelligente", par un procédé connu en soi, ici le procédé dit "DES" à clé secrète. En outre chaque carte possède un code identificateur différent.

L'invention a pour objet de fournir des cartes destinées à un usage unique, c'est-à-dire qui permettent de désembrouiller la réception de la transmission télévisée d'un seul événement déterminé. De ce fait ces cartes doivent être très bon marché, mais par contre leur sécurité peut être relativement faible puisqu'après l'usage unique, elles seront de toute façon inutilisables. Des cartes munies d'un calculateur selon l'art antérieur seraient trop chères pour un tel usage, et l'utilisation d'un code identificateur différent pour chaque carte impliquerait une gestion trop lourde.
Le but de l'invention est atteint par un procédé remarquable en ce que, à l'avance, on définit un tableau de nombres et différentes manières possibles pour engendrer un mot de contrôle par lecture de ce tableau et on inscrit ce tableau dans une mémoire morte dans des cartes de désembrouillage que l'on remet à des utilisateurs de récepteurs, puis au moment de la dite émission déterminée de télévision, on choisit en temps réel la manière de lire dans ce tableau un mot de contrôle parmi les différentes manières prédéfinies, on le lit selon cette manière pour le fournir à l'émetteur en temps réel, et on transmet immédiatement aux récepteurs un signal indiquant quelle est la dite manière de tirer du tableau le mot de contrôle, grâce à quoi les récepteurs génèrent ce mot de la manière indiquée à partir d'une carte à simple mémoire dans laquelle le dit tableau de nombres est inscrit.
Ainsi, la carte ne contient qu'une simple mémoire et est très bon marché. Le seul moyen pratique d'attaquer sa confidentialité serait de reproduire frauduleusement (et de vendre) en un grand nombre d'exemplaires une carte, obtenue éventuellement de façon régulière ("clonage"). La parade est de distribuer les cartes, aux usagers qui y ont droit, seulement au dernier moment.
Avantageusement, ce procédé, utilisé de façon exceptionnelle alors qu'un autre procédé d'embrouillage est employé habituellement, autre procédé dans lequel le mot de contrôle est émis sous forme chiffrée pour permettre aux récepteurs de le reconstituer au moyen d'une clé, est remarquable en ce que le même mot de contrôle est utilisé dans les deux procédés et continue à être émis sous la forme chiffrée pendant l'usage du procédé selon l'invention.

Ainsi les clients habituels de l'émetteur considéré peuvent la regarder comme si de rien n'était.
Avantageusement, on transmet aussi un signal indiquant que l'émission est faite selon le procédé de l'invention.
Ainsi un récepteur appartenant à un utilisateur qui ne possède pas d'abonnement lui procurant une carte intelligente, est capable d'initier une procédure basée sur l'emploi d'une carte selon l'invention.
Selon un mode de réalisation particulier, la dite manière de tirer du tableau le mot de contrôle consiste en l'indication d'une adresse dans ce tableau, et d'un mode de lecture à partir de cette adresse.
Selon différentes variantes, le mode de lecture consiste en une lecture dans l'ordre des adresses décroissantes, ou en une lecture d'une donnée toutes les n données, ou en une lecture avec une progression de valeur d'adresse basée sur un calcul.
Un dispositif émetteur selon l'invention comporte un générateur de mot de contrôle muni de moyens pour lire ce mot dans un tableau de nombres en utilisant une manière de le faire parmi plusieurs manières différentes possibles, de moyens pour choisir une manière désirée parmi les dites plusieurs manières possibles, et de moyens pour envoyer aux récepteurs un signal indiquant quel est le choix effectué à un instant donné en ce qui concerne la dite manière.
Avantageusement, les dits moyens pour choisir une manière désirée consistent essentiellement en un générateur de nombres aléatoires.
Ainsi jusqu'au dernier moment il est impossible de prévoir quels seront les mots de contrôle.
Un dispositif récepteur selon l'invention comporte des moyens pour lire le mot de contrôle dans un tableau de nombres contenu dans une mémoire morte d'une carte à mémoire en utilisant une manière de le faire parmi plusieurs manières différentes, des moyens pour recevoir de l'émetteur le signal indiquant quel est le choix effectué à un instant donné en ce qui concerne la dite manière, et des moyens pour commander la manière de lire des dits moyens pour lire le mot de contrôle, en fonction du signal reçu par les dits moyens pour recevoir le signal de l'émetteur.

Ces aspects de l'invention ainsi que d'autres aspects plus détaillés apparaîtront plus clairement grâce à la description suivante d'un mode de réalisation non limitatif.
La figure 1 est un schéma d'un dispositif d'embrouillage selon l'invention permettant la mise en oeuvre du procédé selon l'invention.
La figure 2 est un schéma d'un dispositif de désembrouillage selon l'invention permettant la mise en oeuvre du procédé selon l'invention.

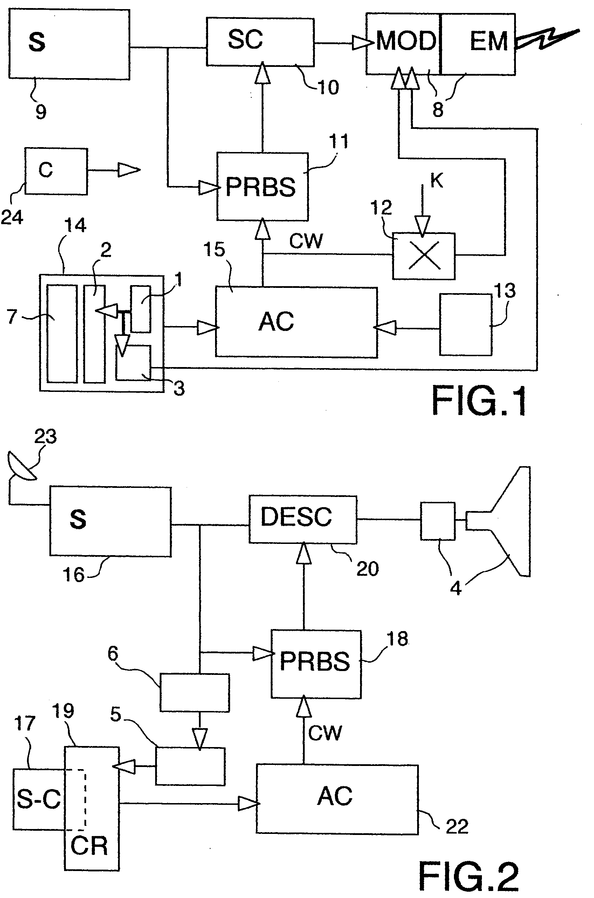

La description qui va suivre sera faite par comparaison et référence au système normalisé d'embrouillage dit "EUROCRYPT" prévu notamment pour être utilisé en association avec le standard "D2-MAC/Paquets". Néanmoins il est clair que l'invention peut aussi être utilisée avec tout autre système du même genre, et aussi avec des systèmes dans lesquels la transmission de la vidéo est entièrement numérique. Un tel système peut être considéré sous deux aspects : l'embrouillage et le chiffrement. Schématiquement, l'embrouillage agit sur les signaux vidéo (ou audio) et le chiffrement concerne les signaux servant de clés pour définir ou commander l'embrouillage.
Dans le dispositif dont le schéma est représenté sur la figure 1, les éléments 8 à 12 sont des éléments prévus pour la norme "EUROCRYPT", et ils ne sont pas modifiés dans le procédé de l'invention. Le dispositif comprend une source de signaux vidéo 9 (par exemple caméra ou magnétoscope), qui fournit les dits signaux vidéo en bande de base à un circuit embrouilleur 10. Il suffit ici de savoir que ce dernier fonctionne sur la base d'un signal dit "séquence d'embrouillage" qui détermine complètement comment l'embrouillage doit être réalisé. Les signaux ainsi embrouillés sont finalement délivrés à un modulateur/émetteur 8 pour leur émission selon n'importe quel procédé connu.
La dite séquence d'embrouillage est engendrée et fournie à l'embrouilleur 10 par un générateur de séquence d'embrouillage 11 qui comprend notamment un générateur pseudo-aléatoire initialisé par un mot de contrôle CW et qui tient compte aussi du numéro de trame en cours, qui lui est fourni par la source vidéo 9. Le générateur 11 est également d'un type connu non modifié.
Un module de contrôle d'accès 15 fournit le dit mot de contrôle au générateur pseudo-aléatoire du générateur de séquence d'embrouillage 11. Il engendre aussi des données qui sont émises pour permettre à chaque récepteur de procéder aux vérifications nécessaires en ce qui concerne le droit de recevoir l'émission en cours.
Dans les systèmes connus le mot de contrôle est créé de façon complètement aléatoire par un circuit 13 qui fabrique des chiffres aléatoires de façon connue par exemple sur la base du bruit engendré par une diode.
Le mot de contrôle est transmis du module de contrôle d'accès 15 au circuit générateur de séquence d'embrouillage 11 et il est aussi transmis au modulateur-émetteur 8 pour être envoyé par le canal de transmission, au niveau des paquets numériques du standard D2-MAC. Bien entendu le mot de contrôle CW n'est pas transmis en clair mais est chiffré au moyen d'une clé K dans un élément de chiffrement 12, avant d'être amené au modulateur-émetteur 8.
Dans le procédé de l'invention, le circuit 13 n'est pas utilisé directement, et c'est un circuit 14 qui fournit des mots de contrôle. Ce circuit 14 est un générateur de mot de contrôle déterministe en ce sens que les mots qu'il génère ne sont pas complètement aléatoires, mais peuvent être prédits sous certaines conditions. Des moyens 2 permettent de lire ce mot dans un tableau de nombres 7 en utilisant une manière de le faire parmi plusieurs manières différentes prédéterminées. Des moyens 1 permettent de choisir une manière désirée parmi les dites plusieurs manières possibles. La dite manière de tirer du tableau le mot de contrôle consiste par exemple en l'indication d'une adresse dans ce tableau, et d'un mode de lecture à partir de cette adresse. Les modes de lecture peuvent être notamment : une lecture en arrière, une lecture d'un octet tous les n octets (si la lecture se fait par octets), une lecture avec une progression de valeur d'adresse basée sur un calcul ou sur la lecture d'un tableau d'adresses. Des moyens 3 permettent de transmettre immédiatement aux récepteurs un signal indiquant quelle est la dite manière de tirer le mot de contrôle du tableau, sous forme d'indications numériques qui sont transmises au modulateur 8 pour être envoyées par le canal de transmission.
Les moyens 1 sont constitués essentiellement d'un circuit générateur de deux chiffres au hasard, un premier chiffre compris par exemple entre 1 et 5 s'il y a 5 modes de lecture prévus, et un deuxième chiffre compris entre 1 et 1024 si par exemple le tableau de nombres comprend 1024 nombres. Le premier chiffre indique le mode de lecture et le second l'adresse de départ dans le tableau. Les moyens 1 peuvent éventuellement faire appel au circuit 13 pour engendrer les chiffres en question. Si la lecture dépasse la fin du tableau, elle se poursuit en continuant par le début du tableau.
Les moyens 2 sont constitués essentiellement d'un processeur câblé, qui génère les signaux nécessaires à la lecture du tableau en mémoire à partir des deux chiffres engendrés par les moyens 1.
Les moyens 3, reliés à l'horloge générale 24 du dispositif, amènent au bon moment des données de type série, représentant les chiffres en question, au modulateur 8 pour qu'elles soient transmises, au niveau des paquets numériques du standard D2-MAC, en étant par exemple ajoutées à un des messages dits "ECM" qui sont justement prévus pour la transmission de données indiquant les caractéristiques de l'émission. Dans ces messages ECM, la définition de certains blocs dits "PI" ("parameter identifier") est encore ouverte et il est donc possible d'y ajouter de telles informations tout en restant compatible avec le standard.

Un dispositif récepteur est représenté sur la figure 2. Il comprend un circuit de réception 16 qui fournit des signaux vidéo en bande de base à partir d'une antenne 23 pour la réception par satellite (ou d'une antenne pour la réception par voie terrestre, non représentée). Les signaux vidéo sont fournis à un circuit désembrouilleur 20. Ce circuit 20 est encore d'un type connu et ne requiert pas de description détaillée. Il correspond au circuit embrouilleur 10. Il fonctionne sur la base d'un signal dit "séquence de désembrouillage" qui détermine complètement comment le désembrouillage doit être réalisé. Les signaux ainsi désembrouillés sont finalement délivrés à un dispositif d'affichage connu 4.
La dite séquence de désembrouillage est engendrée et fournie au désembrouilleur 20 par un générateur de séquence de désembrouillage 18 qui comprend notamment un générateur pseudo-aléatoire initialisé par un mot de contrôle CW. Le générateur 18 est encore d'un type connu.
Un module de contrôle d'accès 22 fournit le dit mot de contrôle au générateur pseudo-aléatoire du générateur de séquence de désembrouillage 18. Il procède en outre à toutes les vérifications nécessaires en ce qui concerne les droits du récepteur à recevoir l'émission en cours.
Selon l'invention, le mot de contrôle est lu au moyen d'un lecteur 19 de "carte à puce" dans une "carte à puce" 17. Cette carte contient tout simplement une mémoire morte dans laquelle est enregistré un tableau de nombres identique au tableau 7, et n'a pas besoin de comporter un microprocesseur intégré. La mémoire en question a par exemple une capacité d'un kilo-octets. Des moyens 5 permettent de commander la lecture du mot de contrôle dans le tableau de nombres de la carte 17 en utilisant une manière de faire indiquée par l'émetteur, parmi plusieurs manières différentes prédéterminées. Cette manière de faire est indiquée sous forme d'un numéro contenu dans les paquets de données reçus par le récepteur et qui est amené à des moyens 6 à partir du circuit de réception 16. Ces moyens 6 engendrent une commande adaptée à la nature des moyens 5, de façon à obtenir la manière désirée de lire les données parmi les plusieurs manières possibles.
Les moyens 1, 2, 3, 5, 6 dont les fonctions ont été décrites ci-dessus peuvent facilement être créés par l'homme du métier sur la base de leur fonctions, dont chacune est connue en soi.
En ce qui concerne le brouillage du son, il est réalisé avec des séquences de bits engendrées à partir du même mot de contrôle CW que le signal vidéo. Le mot de contrôle CW fabriqué selon l'invention est donc utilisé aussi pour brouiller le son.

## Revendications

1. Procédé pour l'embrouillage, au niveau d'un émetteur, et le désembrouillage, au niveau de récepteurs, d'une émission déterminée de télévision à durée limitée, l'embrouillage étant réalisé au moyen d'un générateur pseudo-aléatoire initialisé par un mot de contrôle et le désembrouillage impliquant la reconstruction à la réception, au moyen d'un dispositif à carte à mémoire*e, du mot de contrôle qui initialise un générateur pseudo-aléatoire identique à celui de l'émetteur, lequel générateur pseudo-aléatoire fournit les données nécessaires au désembrouillage, caractérisé en ce que, à l'avance, on définit un tableau de nombres et différentes manières possibles pour engendrer un mot de contrôle par lecture de ce tableau et on inscrit ce tableau dans une mémoire morte dans des cartes de désembrouillage que l'on remet à des utilisateurs de récepteurs, puis au moment de la dite émission déterminée de télévision, on choisit en temps réel la manière de lire dans ce tableau un mot de contrôle parmi les différentes manières prédéfinies, on le lit selon cette manière pour le fournir à l'émetteur en temps réel, et on transmet immédiatement aux récepteurs un signal indiquant quelle est la dite manière de tirer du tableau le mot de contrôle, grâce à quoi les récepteurs génèrent ce mot de la manière indiquée à partir d'une carte à simple mémoire dans laquelle le dit tableau de nombres est inscrit.

2. Procédé selon la revendication 1, utilisé de façon exceptionnelle alors qu'un autre procédé d'embrouillage est employé habituellement, autre procédé dans lequel le mot de contrôle est émis sous forme chiffrée pour permettre aux récepteurs de le reconstituer au moyen d'une clé, caractérisé en ce que le même mot de contrôle est utilisé dans les deux procédés et continue à être émis sous la forme chiffrée pendant l'usage du procédé selon l'invention.

3. Procédé selon la revendication 2, caractérisé en ce qu'on transmet aussi un signal indiquant que l'émission est faite selon le procédé de l'invention.

4. Procédé selon l'une quelconque des revendications 1 à 3, caractérisé en ce que la dite manière de tirer du tableau le mot de contrôle consiste en l'indication d'une adresse dans ce tableau, et d'un mode de lecture à partir de cette adresse.

5. Procédé selon la revendication 4, caractérisé en ce que le mode de lecture consiste en une lecture dans l'ordre des adresses décroissantes.

6. Procédé selon la revendication 4, caractérisé en ce que le mode de lecture consiste en une lecture d'une donnée toutes les n données.

7. Procédé selon la revendication 4, caractérisé en ce que le mode de lecture consiste en une lecture avec une progression de valeur d'adresse basée sur un calcul.

8. Dispositif émetteur pour la mise en oeuvre du procédé selon l'une quelconque des revendications 1 à 7, comportant un générateur pseudo-aléatoire initialisé par un mot de contrôle, caractérisé en ce qu'il comporte un générateur de mot de contrôle muni de moyens pour lire ce mot dans un tableau de nombres en utilisant une manière de le faire parmi plusieurs manières différentes possibles, de moyens pour choisir une manière désirée parmi les dites plusieurs manières possibles, et de moyens pour envoyer aux récepteurs un signal indiquant quel est le choix effectué à un instant donné en ce qui concerne la dite manière.

9. Dispositif émetteur selon la revendication précédente, caractérisé en ce que les dits moyens pour choisir une manière désirée consistent essentiellement en un générateur de nombres aléatoires.

10. Dispositif récepteur pour la mise en oeuvre du procédé selon l'une quelconque des revendications 1 à 7, comportant un générateur pseudo-aléatoire initialisé par un mot de contrôle et un lecteur de carte à mémoire, caractérisé en ce qu'il comporte des moyens pour lire le mot de contrôle dans un tableau de nombres contenu dans une mémoire morte d'une carte à mémoire en utilisant une manière de le faire parmi plusieurs manières différentes, des moyens pour recevoir de l'émetteur le signal indiquant quel est le choix effectué à un instant donné en ce qui concerne la dite manière, et des moyens pour commander la manière de lire des dits moyens pour lire le mot de contrôle, en fonction du signal reçu par les dits moyens pour recevoir le signal de l'émetteur.
